# EUROPÄISCHE PATENTSCHRIFT

(11) **EP 0 470 928 B1**
(45) Veröffentlichungstag und Bekanntmachung des Hinweises auf die Patenterteilung: **28.05.1997**
(21) Anmeldenummer: 91810578.4
(22) Anmeldetag: 17.07.1991
(51) Int. Cl.: C09J 5/00, C08J 5/12, C09J 111/02, C09J 121/02

(54) **Verfahren zum elastischen Verkleben zweier Substratflächen**
Method for elastic bonding of two substrates
Procédé de collage élastique de deux substrats

(30) Priorität: 25.07.1990 CH 2467/90
(43) Veröffentlichungstag der Anmeldung: 12.02.1992
(73) Patentinhaber: ALFA KLEBSTOFFE AG, 8454 Buchberg (CH)
(72) Erfinder: Simmler, Emil, Ch-8454 Buchberg (CH)
(74) Vertreter: Breiter, Heinz

(56) Entgegenhaltungen:
- DE-A- 2 215 632
- FR-A- 2 130 108
- FR-A- 2 312 549

## Beschreibung

Die Erfindung bezieht sich auf ein Verfahren zum elastischen Verkleben zweier Substratflächen, wovon wenigstens eine porös ausgebildet ist, mit wässrigen Klebstoffdispersionen.

Nach üblichen Verfahren werden beim Verbinden von Substraten nach einer ersten Variante beide Substratflächen mit einem Kleber beschichtet und nach dem Trocknen des Klebers zusammengedrückt. Dieser Kontaktkleber kann also seine Wirkung erst entfalten, wenn das Lösungsmittel oder das Wasser verdunstet ist. Wird lediglich eine der beiden zu verbindenden Substratflächen mit einem Kleber beschichtet und die andere Substratfläche nach dem Verdunsten des Lösungsmittels oder Wassers auf den Kleber gedrückt, spricht man von einem Haftkleber.

Kontaktkleber auf der Basis eines Chloroprenpolymerisats, welche nach dem Aufbringen auf eine Substratfläche nach kurzer Ablüftezeit mit einem zweiten, ebenfalls mit einem Chloroprenpolymerisat beschichteten Substratfläche unter Andruck einen festen Verbund liefern, und eine kurzfristige Weiterverarbeitung dieses Verbunds zulassen, haben sich in jüngerer Zeit stark verbreitet. Besonders interessant sind mittels einer Spritzvorrichtung aufgebrachte Kontaktkleber, welche das Auftragen mit geringem Arbeitsaufwand erlauben. Insbesondere Kontaktkleber auf der Basis von Polychloropren, Harzen und organischen Lösungsmitteln haben das Interesse von Klebstoff-Verarbeitern gefunden.

Das Polychloropren und die Harze sind bei üblichen Verfahrenstechniken in organischen Lösungsmitteln, welche einen niedrigen Siedepunkt aufweisen, gelöst. Bevorzugt werden Gemische aus Lösungsmitteln, wie Toluol, Benzin und polaren Lösungsmitteln, z.B. Aceton, Butanon und Essigsäureäthylester. Der Feststoffgehalt üblicher Chloropren-Kontaktkleber liegt lediglich bei 10-25 Gew.-%, die organischen Lösungsmittel überwiegen also bei weitem.

In leicht flüchtigen organischen Lösungsmitteln gelöste Kontaktkleber sind rasch verarbeitbar. Dieser Vorteil wird jedoch durch eine Reihe von Nachteilen weitgehend oder sogar überwiegend aufgehoben. Die beim Spritzen und Trocknen entweichenden organischen Lösungsmittel stellen einen bedeutenden arbeitsökonomischen Verlust dar. Weiter sind die sich verflüchtigenden Lösungsmittel feuergefährlich, gesundheitsschädigend und/oder umweltbelastend. Deshalb müssen stets besondere Anlagen gebaut und Vorkehrungen getroffen werden, um das unkontrollierte Entweichen von Lösungsmitteln zu verhindern oder zumindest zu vermindern.

Aus der DE-A1 30 28 693 ist eine versprühbare, invertierende, multiple Kontaktkleber-Dispersion auf der Basis von Polychloropren-Latex bekannt, welche insbesondere zur Verklebung von Schaumstoffen geeignet ist. Die Kontaktkleber-Dispersion besteht aus einem Chloroprenpolymerisat-Latex, einem darin in Form einer organischen Lösung dispergierten klebrigmachenden Harz, Hilfsstoffen für die Dispersionsbildung, wie Emulgatoren und Schutzkolloide sowie gegebenenfalls weiteren üblichen Zusatzmitteln. Die Dispersion weist bezüglich ihrer Bestandteile ein solches Mengenverhältnis auf, dass sie vor dem Auftragen mittels einer Spritzpistole oder einer anderen geeigneten Sprühvorrichtung vorwiegend in Form einer niedrigviskosen Oel-in-Wasser-Emulsion vorliegt. Unter der Scherbelastung beim Spritzauftrag wandelt sich diese Emulsion in eine hochviskose Wasser-in-Oel-Emulsion um. Nach dieser Variante kann der Anteil an organischen Lösungsmitteln deutlich reduziert werden, ihr Gesamtanteil liegt jedoch immer noch etwa bei 20 Gew.-%.

Aus der FR-A 2 130 108 ist ein Verfahren bekannt, nach welchem vorerst eine Oberfläche des einen Substrats mit einem anionischen elastomeren Latex, dann die Oberfläche des zweiten Substrats mit einem kationischen Latex beschichtet wird. Die beiden Oberflächen mit je einer unterschiedlichen, noch nicht koagulierten Latexschicht werden aufeinandergelegt und so festgehalten, bis die beiden Latexschichten zu koagulieren beginnen. Wegen der aufeinandergelegten Schichten ist die Durchmischung nicht optimal und die Initialhaftung unbefriedigend.

Die FR-A 2 312 549 beschreibt ein Verfahren zur Bildung einer Klebverbindung mit einem Vinylchloridpolymer. Eine wässrige Dispersion oder ein Latex umfasst wenigstens einen synthtischen Kautschuk, einen Acrylharz, ein Polyvinylacetat oder eine Mischung davon sowie wenigstens einen natürlichen Kautschuk, ein synthetisches Kohlenwasserstoffpolymer oder Mischungen davon. Die Komponenten werden in einer bestimmten Reihenfolge zusammengemischt. Es können Schaumstoffe verklebt werden, doch ist die Initialhaftung unbefriedigend.

Der Erfinder hat sich die Aufgabe gestellt, ein Verfahren der eingangs genannten Art zu schaffen, bei welchem die beiden Substratflächen mit hoher Initial- und Endkraft aneinander haften. Weiter soll das Verfahren ökonomisch anwendbar sein.

Die Aufgabe wird erfindungsgemäss nach dem kennzeichen von Patentanspruch 1 gelöst. Spezielle Ausführungsarten und Weiterentwicklungen sind Gegenstand von abhängigen Patentansprüchen.

Die wässrigen Dispersionen können als Kontakt- oder Haftkleber eingesetzt werden. Ueberraschend entwickeln die gemischten Dispersionen auch sofort nach dem Auftragen eine hohe Initialkraft, wenn die beiden Substratflächen nass aufeinandergelegt und aneinandergedrückt werden. Die Klebstoffdispersionen sind drucksensibel: Ohne Wasserabgabe wird beim Andrücken sofort ein Abbindevorgang eingeleitet. Selbst ein sehr schnell verdunstendes Lösungsmittel braucht mehr Zeit, der aufgetragenen Kleberschicht ihre Wirkung zu verleihen, als ein schon nass haftender Kleber auf der Basis der wässrigen Dispersionen.

Das erfindungsgemässe Verfahren eröffnet somit ohne Mehraufwand völlig neue Perspektiven. Bei allen bisher bekannten Verfahren mit Klebern in wässrigen Dispersionen oder organischen Lösungsmitteln musste das Verdunsten der flüssigen Komponente abgewartet werden, bis eine hinreichende Kleb- oder Haftwirkung wirksam wurde (vgl. beispielsweise die Tabelle auf Seite 5 der FR,A 2 130 108). Erfindungsgemäss kann der dispergierte Kleber aufgetragen, die Substratflächen nass, vorzugsweise unmittelbar darauf, aber auch bis etwa 30 Min. später, zusammengedrückt und eine hohe Initialkraft erzeugt werden.

Die erste Dispersion mit dem klebrigmachenden Harz enthält z.B. einen selbstvernetzenden Acrylsäureestercopolymer und bevorzugt einen natürlichen Latex, der nicht vulkanisiert ist. Die mittlere Teilchengrösse liegt bevorzugt bei etwa 0,2 µm.

Die zweite Dispersion mit dem Chloroprenpolymerisat kann kleine Mengen anderer Monomere als Chloropren enthalten, vorzugsweise andere Diene, Acrylsäure oder Methacrylsäure. Insgesamt beträgt jedoch die Menge der zugesetzten anderen Monomere bevorzugt höchstens 30 Gew.-%, bezogen auf die zweite Dispersion.

Wässrige Dispersionen des Klebharzes und des Chloroprenpolymerisats haben vorzugsweise einen Feststoffgehalt von je 30-65 Gew.%, insbesondere 40-60 Gew.-%.

Die erste Dispersion, welche von anionischem Typ ist, wird bevorzugt auf einen pH-Wert von 4,5-6,5 eingestellt. Dazu wird z.B. Bentonit, Harnstoff oder Formalin eingesetzt, wodurch der pH-Wert, ausgehend von etwa 4,5 bis etwa 6,5 angehoben wird. Die zweite Dispersion, von anionischem bzw. nichtionischem Typ, wird beispielsweise mit Harnstoff auf einen pH-Wert von 10-13 eingestellt, ist also stark basisch. Die kolloidale Dispersion eines Polymerisates von Chloropren, welche korrekt 2-Chloro-1,3-Butadien (CH₂=CCl-CH=CH₂) heisst, ist milchig weiss. Die Zugabe von Harnstoff, z.B. als etwa 8%-Lösung, ist auch bezüglich der Reinigung der Spritzvorrichtung von Vorteil.

Der ersten und/oder zweiten Dispersion können an sich bekannte Hilfsstoffe zugegeben werden, vorzugsweise jeweils bis etwa 1 Gew.-%. Die Zugabe von Hilfsstoffen ist abhängig von dem gewählten Mischsystem und den zur Verfügung stehenden Mischvorrichtungen. Als Hilfsstoffe können beispielsweise Emulgatoren, Schutzkolloide, Füllstoffe, Alterungsmittel, Entschäumer, Farbstoffe, Pigmente und/oder Antistatika eingesetzt werden.

Obwohl die Dispersion/en bevorzugt mittels Spritzpistolen oder anderen Aufsprüheinrichtungen, wie Sprühbalken, aufgetragen werden, können sie abgesehen vom Aufspritzen bzw. Aufsprühen auch aufgewalzt, aufgestrichen oder aufgegossen werden. Wesentlich ist, dass auf einfache Weise eine homogene Schicht auf wenigstens einer Substratfläche aufgetragen wird, bevorzugt mit einer spezifischen Menge von 30-300 g/m2, insbesondere 50-150 g/m2. Bei einer Spritzpistole kann ein Durchsatz von 1-5 kg Dispersion pro Stunde erreicht werden, der Durchsatz eines Spritzbalkens liegt im Vergleich zu einer Handpistole entsprechend höher.

Die beiden Dispersionen werden vorzugsweise in einem Mischungsverhältnis der ersten zur zweiten Dispersion von etwa 1:1 aufgetragen, bezogen auf das Gewicht. Dieses Verhältnis ist nicht kritisch, die Abweichung kann ohne weiteres etwa 10-20% betragen. Der pH-Wert der Mischung liegt vorzugsweise im Bereich von 8-9.

Das genaue Mengenverhältnis der Bestandteile der Kleberdispersion, die Zugabe von Hilfsstoffen und weitere Parameter können innerhalb weiter Grenzen variiert werden, je nach Art und Eigenschaften der gewählten Substanzen. Die optimalen Werte können vom Fachmann durch einfaches Ausprobieren leicht ermittelt werden.

Die beiden Dispersionen können, falls sie aufgespritzt oder aufgesprüht werden, während des Auftragens gemischt werden. Dies erfolgt nach einer ersten Variante mit zwei gewöhnlichen Spritzpistolen, indem die beiden Sprühkegel ineinandergerichtet und die Dispersionen während deren Flug vom Spritzkopf zum Substrat vorgemischt werden, und auf der Substratfläche fertig koagulieren. Die Koagulation beginnt also bereits in der Flugphase. Der gleiche Effekt wird mit einer doppeldüsigen Spritzpistole erreicht, bei welcher die beiden Dispersionen in getrennten Kanälen zu Spritz- oder Sprühdüsen geführt werden, welche so gerichtet sind, dass die Sprühkegel der austretenden Dispersionen im Flug vorgemischt werden.

Erfolgt der Auftrag der Dispersionen nicht manuell, werden Spritzbalken eingesetzt, welche entsprechend den doppeldüsigen Spritzpistolen mit paarweise angeordneten Düsen arbeiten.

Nach einer zweiten Variante können die erste und die zweite Dispersion vor dem Auftragen in einem Gefäss mit einer Rührvorrichtung gemischt werden. Vorgängig muss jedoch wenigstens eine der beiden Dispersionen mit Wasser verdünnt werden, vorzugsweise mit einem Gewichtsverhältnis Emulsion/en : Wasser von 1:0,15 bis 1:1. Damit kann die Topfzeit der Mischung bis zu mehreren Monaten verlängert werden. Ohne eine Verdünnung mit Wasser könnte die Topfzeit zu kurz sein. Die gemischte Emulsion kann, wiederum mit einer Spritzpistole oder einem Spritzbalken, aufgetragen werden. Doppeldüsige Pistolen oder paarweise angeordnete Düsen zum Durchmischen sind nicht notwendig.

Das Verfahren kann überall angewendet werden, wo zwei Substratflächen elastisch miteinander verbunden werden. Wenigstens eine Substratfläche muss jedoch porös sein, weil die Feuchtigkeit des eine hohe Initialhaftung aufweisenden nassen Klebers nach dem Verbinden entweichen muss.

Obwohl die Dispersionen mit dem Kleber vorzugsweise bei Raumtemperatur aufgetragen werden, können sie auch erwärmt angewendet werden, beispielsweise bei einer Temperatur von 30-80°C. Im Gegensatz zu allen bekannten gattungsgemässen Verfahren wird erfindungsgemäss auch eine hohe Initialhaftung erzielt, wenn aufgetragene Dispersionen nass zusammengefügt und angedrückt werden. Eine Erwärmung führt zu einer noch schnelleren Koagulation.

Bei einer Spritzpistole oder den Düsen eines Spritzbalkens kann die Erwärmung dadurch erfolgen, dass der Sprühkegel von einem entsprechenden, kegelmantelförmigen Warmluftvorhang umgeben ist.

Eine besonders vorteilhafte Anwendung des erfindungsgemässen Verfahrens liegt im Verkleben von Schaumstoffen. Ein häufiger Arbeitsgang besteht hier darin, dass quaderförmige Schaumstoffblöcke zu Kissen verklebt werden, indem die schmalen Seitenflächen eingeknickt und nach dem Auftragen eines erfindungsgemässen Klebers sofort aufeinandergedrückt werden können. Dank der hohen Initialhaftung kann der angelegte Anpressdruck sofort wieder weggelassen werden. Ein Zurückfedern oder Verschieben des gespannten Schaumstoffs konnte nie festgestellt werden.

Schaumstoffe aller Art, beispielsweise aus Polyäthylen, Polyäther, Polyurethan oder Naturlatex, haben ein breites Verwendungsfeld in der Polstermöbelindustrie, für Sportartikel usw.

Die Vorteile der vorliegenden Erfindung können wie folgt zusammengefasst werden:
- Hohe Initialhaftung von nassen Klebern, auch bei Raumtemperatur
- keine organischen Lösungsmittel
- geringe Abwassermengen, die gut gereinigt oder entsorgt werden können
- breites Anwendungsspektrum.

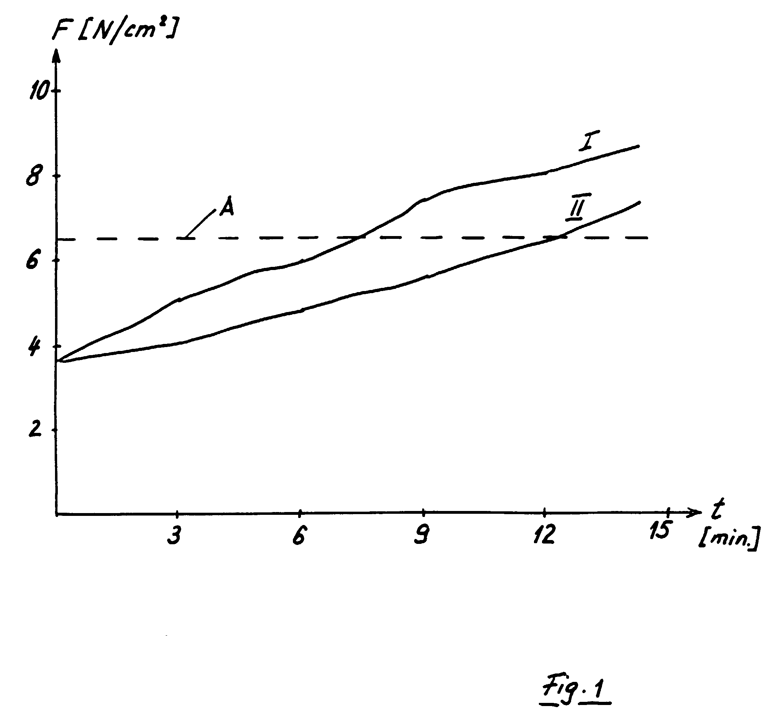

In der einzigen Fig. 1 ist die Haftung F von zwei quaderförmigen Prüflingen aus Polyurethanschaum (30-40 kg/m³) gegen die Zeit t aufgetragen. Die Dispersionen werden nach dem Verfahren gemäss der Erfindung bei 20°C im Verhältnis 1:1 auf zwei Flächen aufgetragen, die Prüflinge nass aufeinandergelegt und angedrückt. Die Koagulation erfolgt ebenfalls bei 20°C. Nach der Variante I werden die zu verklebenden Flächen sofort nach dem Auftragen der Dispersionen aufeinandergelegt und angedrückt, nach der Variante II erst vor der Prüfung, nach einer Ablüftzeit von höchstens 30 Min., jedoch noch nass.

Nach beiden Varianten I und II liegt die Initialhaftung bei etwa 3,7 N/cm², ein Resultat das mit üblichen wässrigen Dispersionen bei weitem nicht erzielt wird. Alle bekannten, nass zusammengefügten Klebeflächen mit wässrigen Dispersionen zeigen keine oder praktisch keine Initialhaftung.

Weiter ist erstaunlich, dass nach Variante I die Haftung F rascher zunimmt als nach Variante II.

Die gemäss Fig. 1 mit einem Spritzdruck von 1 bar aufgetragene, milchigweisse erfindungsgemässe Dispersion hat einen Festkörpergehalt von 60%, bei einer Dichte von 1,03 g/cm³. Der mittlere pH-Wert liegt bei etwa 8,5. Die Auftragsmenge beträgt etwa 125 g/m².

Die Endfestigkeit wird wegen des verdunstenden Wassers erst nach etwa 24 Stunden erreicht. Vergleichsversuche mit Leder haben ergeben, dass die Endfestigkeit bei etwa 160 N/cm² liegt.

Die gestrichelte, horizontale Linie A in Fig. 1 zeigt den Beginn des Schaumausrisses, welcher nach wenigen Minuten erreicht wird. Bei einer Kraftanwendung oberhalb dieser Grenze von etwa 6,5 N/cm² reisst nicht mehr die Klebestelle, sondern der Polyurethanschaum. Die Reissdehnung liegt bei etwa 600%.

Die Wärmestandfestigkeit beträgt 100-120°C.

## Patentansprüche

1. Verfahren zum elastischen Verkleben zweier Substratflächen, wovon wenigstens eine porös ausgebildet ist,
mit wässrigen Klebstoffdispersionen,
dadurch gekennzeichnet, dass
eine kautschukhlatige, anionische erste Dispersion mit einem Acrylsäureestercopolymer und eine kolloidale anionische bzw. nichtionische zweite Dispersion eines Chloroprenpolymerisats nach vorheriger oder mit gleichzeitiger Durchmischung auf wenigstens eine der Substratflächen aufgetragen, und die zu verklebenden Substratflächen mit den nassen Klebstoffdispersionen, 0-30 min nach deren Auftrag, aufeinandergelegt, angedrückt und bei hoher Initialkraft sofort wieder entlastet werden.

2. Verfahren nach Anspruch 1, dadurch gekennzeichnet, dass die erste Dispersion mit einem selbstvernetzenden Acrylsäureestercopolymer und vorzugsweise einem natürlichen, nicht vulkanisierten Latex, eingesetzt wird.

3. Verfahren nach Anspruch 1 oder 2, dadurch gekennzeichnet, dass die zweite Dispersion mit einem Chloroprenpolymerisat, welches kleine Mengen anderer Monomere, vorzugsweise anderer Diene, Acrylsäure, Methacrylsäure, insgesamt höchstens 30 Gew.-%, enthält, eingesetzt wird.

4. Verfahren nach einem der Ansprüche 1 bis 3, dadurch gekennzeichnet, dass die erste Dispersion mit einem pH-Wert von 4,5-6,5 und die zweite Dispersion mit einem pH-Wert von 10-13 eingesetzt wird.

5. Verfahren nach einem der Ansprüche 1 bis 4, dadurch gekennzeichnet, dass der ersten und/oder zweiten Dispersion Hilfsstoffe, vorzugsweise jeweils bis etwa 1 Gew.-%, zugegeben werden.

6. Verfahren nach einem der Ansprüche 1 bis 5, dadurch gekennzeichnet, dass die Dispersion/en mit einer spezifischen Menge von 30-300 g/m², bevorzugt 50-150 g/cm², aufgespritzt, aufgesprüht, aufgewalzt, aufgestrichen oder aufgegossen wird/werden, vorzugsweise in einem Mischungsverhältnis der ersten zur zweiten Dispersion von etwa 1:1.

7. Verfahren nach einem der Ansprüche 1 bis 6, dadurch gekennzeichnet, dass die erste und zweite Dispersion mit zwei eindüsigen Spritzpistolen, mit einer doppeldüsigen Spritzpistole oder mit einem Spritzbalken aufgetragen wird, wobei sich je zwei der gebildeten Spritz- oder Sprühstrahlen kreuzen und auf dem Substrat vorgemischt auftreffen.

8. Verfahren nach einem der Ansprüche 1 bis 6, dadurch gekennzeichnet, dass die erste und/oder zweite Dispersion mit Wasser verdünnt, vorzugsweise mit einem wichtsverhältnis Emulsion/en : Wasser von 1:0,15 bis 1:1, die Dispersionen in einem Gefäss gemischt und auf die Substratfläche/n aufgetragen werden.

9. Verfahren nach einem der Ansprüche 1 bis 8, dadurch gekennzeichnet, dass die Dispersion/en bei Raumtemperatur aufgetragen wird/werden.

10. Verfahren nach einem der Ansprüche 1 bis 8, dadurch gekennzeichnet, dass die Dispersion/en leicht erwärmt, vorzugsweise bei 30-80°C aufgetragen wird/werden.

## Revendications

1. Procédé de collage élastique de deux surfaces de substrats, dont au moins l'une est de structure poreuse, au moyen de dispersions aqueuses d'adhésifs, caractérisé en ce qu'une première dispersion anionique contenant du caoutchouc avec un copolymère d'ester d'acide acrylique et une deuxième solution colloïdale anionique ou non ionique d'un polymérisat de chloroprène sont étendues, les composants étant mélangés, soit avant d'être étendus, soit simultanément tandis qu'ils le sont, sur au moins l'une des surfaces de substrats, et les surfaces de substrats à coller revêtues des dispersions d'adhésifs à l'état humide sont appliquées et appuyées l'une contre l'autre, de 0 à 30 min après que les dispersions aient été étendues, et immédiatement relâchées en adhérant par une force initiale élevée.

2. Procédé selon la revendication 1, caractérisé en ce que la première dispersion comprend un copolymère d'ester d'acide acrylique auto-réticulant et de préférence un latex naturel, non vulcanisé.

3. Procédé selon la revendication 1 ou 2, caractérisé en ce que la deuxième dispersion comprend un polymérisat de chloroprène qui contient de petites quantités d'autres monomères, de préférence d'autres diènes, de l'acide acrylique, ou de l'acide méthacrylique, pour une teneur totale maximale de 30 % en poids.

4. Procédé selon l'une des revendications 1 à 3, caractérisé en ce que la valeur du pH de la première dispersion est réglée de 4,5 à 6,5 et la valeur du pH de la deuxième dispersion est réglée de 10 à 13.

5. Procédé selon l'une des revendications 1 à 4, caractérisé en ce que des matières auxiliaires, respectivement jusqu'à un teneur de 1 % en poids, sont ajoutées à la première et/ou à la deuxième dispersion.

6. Procédé selon l'une des revendications 1 à 5, caractérisé en ce que la ou les dispersion(s) sont pulvérisées, atomisées, appliquées au rouleau ou au pinceau ou versées, selon une quantité spécifique de 30 à 300 g/m², de préférence de 50 à 150 g/m², de préférence selon un rapport de mélange d'environ 1/1 entre la première et la deuxième dispersion.

7. Procédé selon l'une des revendications 1 à 6, caractérisé en ce que les première et deuxième dispersions sont étendues au moyen de deux pistolets pulvérisateurs à une buse, d'un pistolet pulvérisateur à deux buses ou d'une barre de pulvérisation, et, dans tous les cas, deux jets de pulvérisation ou d'atomisation se croisent et parviennent sur le substrat à l'état de mélange préalable.

8. Procédé selon l'une des revendications 1 à 6, caractérisé en ce que la première et/ou la deuxième dispersion est diluée à l'eau, de préférence selon un rapport en poids de 1/0,15 à 1/1 entre l'émulsion ou les émulsions et l'eau, les dispersions sont mélangées dans un récipient et sont étendues sur la ou les surface(s) de substrat(s).

9. Procédé selon l'une des revendications 1 à 8, caractérisé en ce que la ou les dispersion(s) sont étendues à température ambiante.

10. Procédé selon l'une des revendications 1 à 8, caractérisé en ce que la ou les dispersion(s) sont étendue(s) légèrement chauffées, de préférence à 30 à 80 °C.

## Claims

1. Process for elastic adhesion of two substrate surfaces, of which at least one is porous, with aqueous adhesive dispersions,
characterised in that
a rubber-containing anionic first dispersion with an acrylic acid ester copolymer and a colloidal, anionic or non-ionic second dispersion of a chloroprene polymerisate, after prior or simultaneous mixing, are applied to at least one of the substrate surfaces, and the substrate surfaces to be glued with the wet adhesive dispersions are placed together, pressed together 0-30 minutes after application and immediately released again at a high initial force.

2. Process according to claim 1, characterised in that the first dispersion is a self-reticulating acrylic acid ester copolymer and preferably a natural non-vulcanised latex.

3. Process according to claim 1 or 2, characterised in that the second dispersion is a chloroprene polymerisate which contains small quantities of other monomers, preferably other dienes, acrylic acid, methacrylic acid, to a total maximum of 30 w.%.

4. Process according to any of claims 1 to 3, characterised in that the first dispersion has a pH value of 4.5 - 6.5 and the second dispersion a pH value of 10 - 13.

5. Process according to any of claims 1 to 4, characterised in that to the first and/or second dispersion are added additives, preferably in each case up to 1 w.%.

6. Process according to any of claims 1 to 5, characterised in that the dispersion(s) with a specific quantity of 30 - 300 g/m², preferably 50 - 150 g/cm², can be applied by spraying, rolling, painting or pouring, preferably in a mixing ratio of the first to the second dispersion of approx 1:1.

7. Process according to any of claims 1 to 6, characterised in the first and second dispersions are applied with two single-nozzle spray guns, one double-nozzle spray gun, or a spray bar, where in each case two of the spray jets formed cross to reach the substrate premixed.

8. Process according to any of claims 1 to 6, characterised in that the first and/or second dispersion is diluted with water, preferably in a weight ratio of emulsion(s) to water of 1:0.15 to 1:1, the dispersions being mixed in a vessel and applied to the substrate surfaces.

9. Process according to any of claims 1 to 8, characterised in that the dispersion(s) is/are applied at room temperature.

10. Process according to any of claims 1 to 8, characterised in that the dispersion(s) is/are heated slightly, preferably to 30 to 80°C.
